# EUROPEAN PATENT SPECIFICATION

(11) **EP 3 627 128 B1**
(45) Date of publication and mention of the grant of the patent: **15.03.2023**
(21) Application number: 19197857.6
(22) Date of filing: 17.09.2019
(51) Int. Cl.: G01L 9/00

(54) **HIGH TEMPERATURE CAPACITIVE PRESSURE SENSOR FABRICATED WITH VIA-FILLED SAPPHIRE WAFERS**
HOCHTEMPERATUR-KAPAZITIVER DRUCKSENSOR MIT VIA-GEFÜLLTEN SAPHIRWAFERN
CAPTEUR DE PRESSION CAPACITIF HAUTE TEMPÉRATURE FABRIQUÉ AVEC DES PLAQUETTES SAPPHIRE REMPLIES VIA

(30) Priority: 18.09.2018 US 201816133944
(43) Date of publication of application: 25.03.2020
(73) Proprietor: ROSEMOUNT AEROSPACE INC., Burnsville, MN 55306-4898 (US)
(72) Inventor: ZHANG, Weibin, Burnsville, MN Minnesota 55337 (US)
(74) Representative: Dehns

(56) References cited:
- US-A- 5 005 421
- US-A1- 2012 024 073
- US-A1- 2015 276 512
- US-A1- 2016 084 723
- US-A1- 2016 263 384
- US-A1- 2018 364 125

## Description

### BACKGROUND

The present disclosure relates generally to pressure measurement devices, and in particular, to capacitive pressure sensors.

Capacitive pressure sensors are used to measure pressure by detecting a capacitance change between two electrodes of the sensor. Each electrode is positioned on a wafer. The wafers are hermetically sealed to form a capacitor chamber. Because of the hermeticity, pressure changes cause one or more of the wafers to move, altering the gap between the two electrodes and resulting in the capacitance change. Maintaining the sensor material stability as well as the hermeticity of the capacitive pressure sensor can be difficult for high temperature applications.

US 2015/276512 A1 discloses a capacitive pressure sensor including a substrate wafer and a diaphragm wafer, which allows an electrical connection from one wafer side.

US 5 005 421 A discloses a pressure sensor comprising a base body and diaphragm which are assembled at a defined distance apart parallel to each other to form a chamber.

US 2016/263384 A1 discloses a hermetically sealed feedthrough filter assembly attachable to an active implantable medical device.

US 2016/084723 A1 discloses a pressure sensor with a ceramic base body, a measuring membrane connected to the base body forming a measuring chamber and an electromechanical converter serving to convert a pressure-related deformation of the measuring membrane into a primary electrical signal.

US2007261497 A1 discloses a pressure cavity being durable, stable, and biocompatible and configured in such a way that it constitutes pico to nanoliter-scale volume, the pressure cavity being hermetically sealed from the exterior environment while maintaining the ability to communicate with other devices.

### SUMMARY

From a first aspect, the invention provides a high temperature capacitive pressure sensor as claimed in claim 1.

The capacitive pressure sensor of the preceding paragraph can optionally include any one or more of the following features, configurations and/or additional components:
The connector has a melting point lower than a melting point of the first via and a melting point of the second via, the melting point of the first via being the same as the melting point of the second via.

A second recess extending into the second sapphire wafer at the second interior wafer surface, wherein the second electrode is deposited on the second interior wafer surface within the second recess, and the first recess and the second recess define the capacitor chamber.

The capacitor chamber is a vacuum chamber, the first via comprises a first filler, and the second via comprises a second filler, the first filler and the second filler being made of a gold-based material that becomes solid gold upon heating or a platinum-based material that becomes solid platinum upon heating.

The first electrode fully covers the first interior via surface of the first via.

From a further aspect, the invention provides a method of making a capacitive pressure sensor as claimed in claim 6.

The method of the preceding paragraph can optionally include any one or more of the following features, configurations and/or additional components:
Etching the first interior wafer surface to form a first recess, wherein the first electrode is deposited within the first recess.

The capacitor chamber is formed to be a vacuum chamber.

Etching the second interior wafer surface to form a second recess, wherein the second electrode is deposited within the second recess.

Bonding the first sapphire wafer to the second sapphire wafer includes bonding the connector to the second electrode on the second sapphire wafer.

Bonding the first sapphire wafer to the second sapphire wafer includes bonding the connector to a second interior via surface of the second via.

### BRIEF DESCRIPTION OF THE DRAWINGS

Preferred embodiments of the invention will now be described, by way of example only, and with reference to the accompanying drawings.
FIG. 1 is a cross-sectional view of a capacitive pressure sensor, which falls outside the scope of the claimed invention.
FIG. 2 is a cross-sectional view of a capacitive pressure sensor having a first sapphire wafer with a first recess and a second sapphire wafer with a second recess, which falls outside the scope of the claimed invention.
FIG. 3 is a cross-sectional view of a capacitive pressure sensor having a first sapphire wafer with a first via and a second via and a connector connecting the second via and a second electrode.
FIG. 4 is a cross-sectional view of a capacitive pressure sensor having a first sapphire wafer with a first via, a second via, a first recess, and a connector connecting the second via and a second electrode of a second sapphire wafer having a second recess.

### DETAILED DESCRIPTION

In general, the present disclosure describes a capacitive pressure sensor that has sapphire wafers with vias that solidly fill holes in the sapphire wafers such that the interior and exterior surfaces of the vias are flush with the interior and exterior surfaces of the sapphire wafers. Electrodes are deposited onto the interior surfaces of the wafers and the interior surfaces of the vias before the wafers are bonded together to form a capacitor chamber. As a result, the capacitive pressure sensor is hermetically sealed and can withstand extreme high temperature environments, or environments at or above 800 degrees Celsius. Additionally, the process for forming the capacitive pressure sensor is more controlled and there is no risk of conductive paste reflowing or outgassing of the vias.

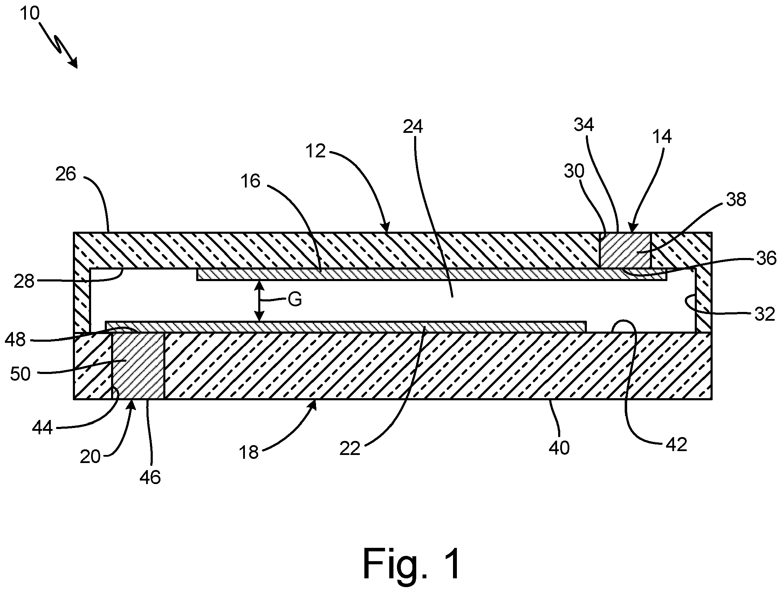

FIG. 1 is a cross-sectional view of capacitive pressure sensor 10, which falls outside the scope of the claimed invention.

Capacitive pressure sensor 10 includes first sapphire wafer 12, first via 14, first electrode 16, second sapphire wafer 18, second via 20, second electrode 22, and capacitor chamber 24. First sapphire wafer 12 includes first exterior wafer surface 26, first interior wafer surface 28, first hole 30, and recess 32. First via 14 includes first exterior via surface 34, first interior via surface 36, and first filler 38. Second sapphire wafer 18 includes second exterior wafer surface 40, second interior wafer surface 42, and second hole 44. Second via 20 includes second exterior via surface 46, second interior via surface 48, and second filler 50.

Capacitive pressure sensor 10 is a high temperature capacitive pressure sensor. First sapphire wafer 12 is a dielectric single crystal sapphire membrane of capacitive pressure sensor 10. In this embodiment, first sapphire wafer 12 is a movable wafer. First via 14 extends through first sapphire wafer 12 and is hermetically sealed to first sapphire wafer 12. First via 14 is electrically conductive. First electrode 16 is positioned on first sapphire wafer 12 and first via 14. First electrode 16 is also electrically connected to first via 14. Second sapphire wafer 18 is a dielectric single crystal sapphire membrane of capacitive pressure sensor 10. In this embodiment, second sapphire wafer 18 is a stationary wafer. In alternate embodiments, second sapphire wafer 18 is a movable wafer. In further alternate embodiments, first sapphire wafer 12 is a stationary wafer and second sapphire wafer 18A is a movable wafer. Second via 20 extends through second sapphire wafer 18 and is hermetically sealed to second sapphire wafer 18. Second via 20 is electrically conductive. Second electrode 22 is positioned on second sapphire wafer 18 and second via 20. Second electrode 22 is also electrically connected to second via 20. First sapphire wafer 12 is peripherally and hermetically bonded to second sapphire wafer 18 to form capacitor chamber 24, first electrode 16 and second electrode 22 being within capacitor chamber 24. Capacitor chamber 24 is hermetically sealed. First electrode 16 is opposite second electrode 22 within capacitor chamber 24, such that gap G is formed between first electrode 16 and second electrode 22.

First exterior wafer surface 26 is at a first side of first sapphire wafer 12, and first interior wafer surface 28 is at a second side of first sapphire wafer 12. First interior wafer surface 28 partially defines capacitor chamber 24. First hole 30 is an opening defined by first sapphire wafer 12 that extends through first sapphire wafer 12 from first exterior wafer surface 26 to first interior wafer surface 28. Recess 32 extends into first sapphire wafer 12 at first interior wafer surface 28. Recess 32 has a substantially uniform depth. First electrode 16 is positioned on first interior wafer surface 28 within recess 32.

First exterior via surface 34 is at a first side of first via 14, and first interior via surface 36 is at a second side of first via 14. First via 14 is within first hole 30 such that first via 14 solidly fills first hole 30, or takes up the entire space of first hole 30 such that first hole 30 is completely filled and no air gaps exist between first via 14 and first hole 30. First exterior via surface 34 is about flush, or essentially co-planar, with first exterior wafer surface 26, and first interior via surface 36 is about flush, or essentially co-planar, with first interior wafer surface 28. First electrode 16 is positioned on first interior wafer surface 28 and first interior via surface 36. First interior via surface 36 may be slightly dimpled, but remains aligned with first interior wafer surface 28 so that first electrode 16 contacts and covers first interior via surface 36. In this embodiment, first electrode 16 fully covers first interior via surface 36. First via 14 comprises, or is formed of, electrically conductive first filler 38. In this embodiment, first filler 38 is a gold-based paste or material that becomes solid gold during formation of first via 14. As such, first filler 38 begins as a paste primarily made of gold and solidifies to become solid gold, which has a high melting point. In alternate embodiments, first filler 38 may be a platinum-based material or any other suitable metal-based material that solidifies to become a solid metal with a high melting point such that first filler 38 can withstand extreme high temperature applications.

Second exterior wafer surface 40 is at a first side of second sapphire wafer 18, and second interior wafer surface 42 is at a second side of second sapphire wafer 18. Second interior wafer surface 42 partially defines capacitor chamber 24. Second hole 44 is an opening defined by second sapphire wafer 18 that extends through second sapphire wafer 18 from second exterior wafer surface 40 to second interior wafer surface 42. Second electrode 22 is positioned on second interior wafer surface 42.

Second exterior via surface 46 is at a first side of second via 20, and second interior via surface 48 is at a second side of second via 20. Second via 20 is within second hole 44 such that second via 20 solidly fills second hole 44, or takes up the entire space of second hole 44 such that second hole 44 is completely filled and no air gaps exist between second via 20 and second hole 44. Second exterior via surface 46 is about flush, or essentially co-planar, with second exterior wafer surface 40, and second interior via surface 48 is about flush, or essentially co-planar, with second interior wafer surface 42. Second electrode 22 is positioned on second interior wafer surface 42 and second interior via surface 48. Second interior via surface 48 may be slightly dimpled, but remains aligned with second interior wafer surface 42 so that second electrode 22 contacts and covers second interior via surface 48. In this embodiment, second electrode 22 fully covers second interior via surface 48. Second via 20 comprises, or is formed of, electrically conductive second filler 50. In this embodiment, second filler 50 is a gold-based paste or material that becomes solid gold during formation of second via 20. As such, second filler 50 begins as a paste primarily made of gold and solidifies to become solid gold, which has a high melting point. In alternate embodiments, second filler 50 may be a platinum-based material or any other suitable metal-based material that solidifies to become a solid metal with a high melting point such that second filler 50 can withstand extreme high temperature applications.

Capacitive pressure sensor 10 is made by drilling, such as by laser drilling, first hole 30 in first sapphire wafer 12 and drilling, such as by laser drilling, second hole 44 in second sapphire wafer 18. First hole 30 is solidly, or completely, filled with first via 14, and second hole 44 is solidly, or completely, filled with second via 20. To fill first hole 30, first filler 38 of first via 14 is pressed into first hole 30 in the form of a paste. First filler 38 is then heated until first filler 38 bonds and solidifies to become hermetically sealed to first sapphire wafer 12. To fill second hole 44, second filler 50 of second via 20 is pressed into second hole 44 in the form of a paste. Second filler 50 is then heated until second filler 50 bonds and solidifies to become hermetically sealed to second sapphire wafer 18. Because first via 14 and second via 20 comprise first filler 38 and second filler 50, respectively, which have high melting points, such a bonding process occurs at a temperature high enough to melt first filler 38 and second filler 50.

The first sapphire wafer 12 and the second sapphire wafer 18 are then EPI-polished to grind down, or remove, excess first filler 30 and second filler 50, respectively, until first exterior via surface 34, first interior via surface 36, second exterior via surface 46, and second interior via surface 48 are essentially flat, and first sapphire wafer 12 and second sapphire wafer 18 are restored for further bonding. Specifically, first sapphire wafer 12 and first via 14 are polished such that first exterior via surface 34 is about flush, or essentially co-planar, with first exterior wafer surface 26 and first interior via surface 36 is about flush, or essentially co-planar, with first interior wafer surface 28. Second sapphire wafer 18 and second via 20 are polished such that second exterior via surface 46 is about flush, or essentially co-planar, with second exterior wafer surface 40 and second interior via surface 48 is about flush, or essentially co-planar, with second interior wafer surface 48. Following the formation of first via 14 and second via 20, first interior wafer surface 28 of first sapphire wafer 12 is then etched to form recess 32. In alternate embodiments, recess 32 may be etched before the formation of first via 14 and second via 20.

First electrode 16 is deposited on an essentially flat surface formed by first interior wafer surface 28 and first interior via surface 36 such that first electrode 16 is positioned on both first interior wafer surface 28 and first interior via surface 36. Second electrode 22 is deposited on an essentially flat surface formed by second interior wafer surface 42 and second interior via surface 48 such that second electrode 22 is positioned on both second interior wafer surface 42 and second interior via surface 48.

First sapphire wafer 12 is directly peripherally bonded to second sapphire wafer 18 at first interior wafer surface 28 and second interior wafer surface 42, respectively, through sapphire-sapphire direct bonding under vacuum to hermetically seal first sapphire wafer 12 to second sapphire wafer 18 and to form capacitor chamber 24. More specifically, first sapphire wafer 12 is bonded to second sapphire wafer 18 in a vacuum oven, and first recess 32 partially defines capacitor chamber 24. As a result, sealed capacitor chamber 24 is a vacuum chamber, which is required for pressure sensing.

First sapphire wafer 12 and second sapphire wafer 18 withstand extreme high temperatures because they are made of sapphire. Additionally, first filler 38 and second filler 50 that make up first via 14 and second via 20, respectively, can withstand extreme high temperatures because they are made of materials with high melting points. As such, capacitive pressure sensor 10 has the ability to measure pressure in extreme high temperature environments.

Capacitive pressure sensor 10 measures pressure by detecting a capacitance change between first electrode 16 and second electrode 18. Capacitance is a function of gap G between first electrode 16 and second electrode 18. Gap G changes when movable first sapphire wafer 12 deflects toward or away from stationary second sapphire wafer 18 as a result of external pressure due to the vacuum within capacitor chamber 24. First via 14 and second via 20 are physically and electrically connected to first electrode 16 and second electrode 22, respectively, to communicate the capacitance change as first sapphire wafer 12 and second sapphire wafer 18 are non-conductive.

First via 14 and second via 20 solidly fill first hole 30 and second hole 44, respectively, to achieve hermetic sealing. Polishing down excess first filler 30 and second filler 50 creates flat surfaces that allow first electrode 16 and second electrode 22 to fully cover first interior via surface 36 and second interior via surface 48, respectively, so that no leaks can occur at edges of first via 14 and second via 20. Specifically, first electrode 16 and second electrode 20 can fully cover first interior via surface 36 and second interior via surface 48, respectively, because first interior via surface 36 is about flush with first interior wafer surface 28 and second interior via surface 48 is about flush with second interior wafer surface 42. As a result, first electrode 16 and second electrode 20 provide another layer of sealing by covering first hole 30 and second hole 44, further ensuring that capacitor chamber 24 is hermetically sealed.

Traditionally, capacitive pressure sensors may include vias formed by metal film sputtering or conductive paste printing after the first wafer and the second wafer have already been bonded together to form the capacitor chamber. Vias comprising metal thin films can be difficult to hermetically seal because the holes in which the vias are positioned often have rough and uneven sidewalls and edges. Vias comprising conductive paste, such as glass frit, can be challenging to form because enough conductive paste needs to be pressed into the hole to contact the electrode and provide hermetic sealing, but not so much paste can be pressed in that the paste begins flowing into the capacitor chamber. Further, traditional conductive pastes can outgas during the curing process, disrupting the hermeticity of the capacitor chamber. Additionally, traditional conductive pastes are unsuitable for high temperature environments because they melt and reflow, which also disrupts the hermetic seal. As a result, typical capacitive pressure sensors can be difficult to form and difficult to hermetically seal, particularly in high temperature environments.

Capacitive pressure sensor 10 is suitable for use in extreme high temperature applications, such as 800 degrees Celsius or above, and other harsh environmental applications. Because first via 14 and second via 20 are made of gold-based material that has a melting point higher than traditional fillers, first via 14 and second via 20 are not at risk of outgassing or reflowing and still provide good electric conduction. Capacitive pressure sensor 10 is easy to hermetically seal because first hole 30 and second hole 44 are solidly filled with first via 14 and second via 20. Capacitive pressure sensor 10 remains hermetically sealed not only because first via 14 and second via 18 do not outgas or reflow, but also because first electrode 16 and second electrode 22 provide additional seals over first hole 30 and second hole 44, respectively. Maintaining hermeticity is important because capacitive pressure sensor 10 must be hermetically sealed in order to maintain a vacuum within capacitor chamber 24, which is necessary in order for capacitive chamber 24 to function properly. For example, if capacitive pressure sensor 10 is not hermetically sealed and capacitive chamber 24 is no longer a vacuum chamber, first sapphire wafer 12 does not properly deflect in response to external pressure.

More control over the formation of capacitive pressure sensor 10 is also possible because first via 14 and second via 20 are formed before first sapphire wafer 12 is bonded to second sapphire wafer 18. First, since first via 14 and second via 20 are formed before capacitor chamber 24 is formed, high temperature first filler 30 and second filler 50 can be used without considering high temperature heating effects on other processes or components of capacitive pressure sensor 10. Second, because first sapphire wafer 12 is still separate from second sapphire wafer 18, first interior wafer surface 28, first interior via surface 36, second interior wafer surface 42, and second interior via surface 48 are easily visible and accessible. As a result, first interior via surface 36 and second interior via surface 48 can be polished, and first electrode 16 and second electrode 22 can be deposited on first interior via surface 36 and second interior via surface 48, respectively. Third, because first sapphire wafer 12 has not yet been bonded to second sapphire wafer 18 and excess first filler 30 and second filler 50 can be polished away prior to the formation of capacitor chamber 24, first filler 30 and second filler 50 are not at risk of flowing into capacitor chamber 24 during formation of first via 14 and second via 20. Fourth, the hermeticity of first sapphire wafer 12 and first via 14 and the hermeticity of second sapphire wafer 18 and second via 20 is easier to test with first sapphire wafer 12 and second sapphire wafer 18 not bonded together, making it possible to ensure that first via 14 and second via 20 are hermetically sealed prior to forming capacitor chamber 24. Likewise, it is possible to easily test and ensure that first electrode 16 and second electrode 22 are sealed to and in electrical communication with first via 14 and second via 20, respectively, before first sapphire wafer 12 and second sapphire wafer 18 are bonded together. As such, the method for making capacitive pressure sensor 10 results in greater process robustness.

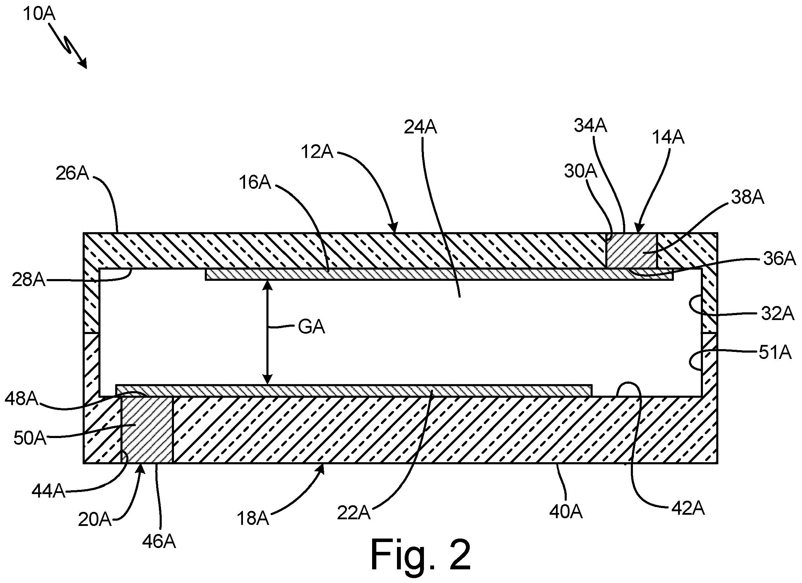

FIG. 2 is a cross-sectional view of capacitive pressure sensor 10A, which generally falls outside the scope of the present disclosure, having first sapphire wafer 12A with first recess 32A and second sapphire wafer 18B with second recess 51A. Capacitive pressure sensor 10A includes first sapphire wafer 12A, first via 14A, first electrode 16A, second sapphire wafer 18A, second via 20A, second electrode 22A, and capacitor chamber 24A. First sapphire wafer 12A includes first exterior wafer surface 26A, first interior wafer surface 28A, first hole 30A, and first recess 32A. First via 14A includes first exterior via surface 34A, first interior via surface 36A, and first filler 38A. Second sapphire wafer 18A includes second exterior wafer surface 40A, second interior wafer surface 42A, second hole 44A, and second recess 51A. Second via 20A includes second exterior via surface 46A, second interior via surface 48A, and second filler 50A.

Capacitive pressure sensor 10A has the same structure and function as capacitive pressure sensor 10 in FIG. 1, except that second sapphire wafer 18A includes second recess 51A. First recess 32A has the same structure and function as described in reference to recess 32 of first sapphire wafer 12 of capacitive pressure sensor 10 in FIG. 1. Second recess 51A extends into second sapphire wafer 18A at second interior wafer surface 42A. Second recess 51A has a substantially uniform depth. Second electrode 22A is positioned on second interior wafer surface 42A within second recess 51A. Following the formation of first via 14A and second via 20A, second interior wafer surface 42A of second sapphire wafer 18A is etched to form second recess 51A. In alternate embodiments, second recess 32A may be etched before the formation of first via 14A and second via 20A. First sapphire wafer 12A is directly peripherally bonded to second sapphire wafer 18A at first interior wafer surface 28A and second interior wafer surface 42A, respectively, through sapphire-sapphire direct bonding under vacuum to hermetically seal first sapphire wafer 12A to second sapphire wafer 18A and to form capacitor chamber 24A. More specifically, first sapphire wafer 12A is bonded to second sapphire wafer 18A in a vacuum oven, and first recess 32A and second recess 51A define capacitor chamber 24A.

In this embodiment, capacitor chamber 24A formed by first recess 32A and second recess 51A has a larger gap GA than gap G described in reference to FIG. 1. In alternate embodiments, gap GA may be the same size or smaller than gap G. Having first sapphire wafer 12A with first recess 32A and second sapphire wafer 18A with second recess 51A offers a different packaging option for capacitive pressure sensor 10A.

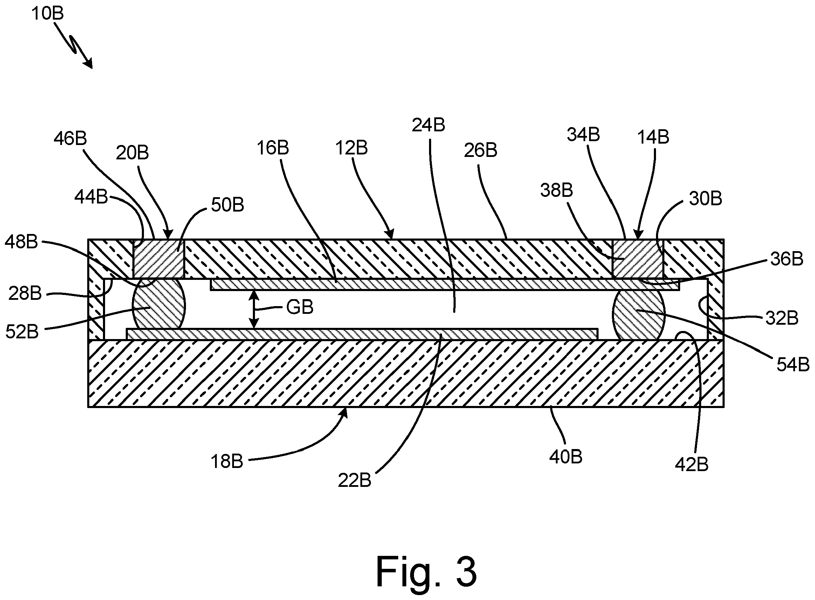

FIG. 3 is a cross-sectional view of capacitive pressure sensor 10B having first sapphire wafer 12B with first via 14B and second via 20B and connector 52B connecting second via 20B and second electrode 22B. Capacitive pressure sensor 10B includes first sapphire wafer 12B, first via 14B, first electrode 16B, second sapphire wafer 18B, second via 20B, second electrode 22B, capacitor chamber 24B, connector 52B, and spacer 54B. First sapphire wafer 12B includes first exterior wafer surface 26B, first interior wafer surface 28B, first hole 30B, recess 32B, and second hole 44B. First via 14B includes first exterior via surface 34B, first interior via surface 36B, and first filler 38B. Second sapphire wafer 18B includes second exterior wafer surface 40B and second interior wafer surface 42B. Second via 20B includes second exterior via surface 46B, second interior via surface 48B, and second filler 50B.

Capacitive pressure sensor 10B has a similar structure and function as capacitive pressure sensor 10 of FIG. 1 except that second via 20B extends through second hole 44B in first sapphire wafer 12B and connector 52B is bonded to second interior via surface 48B of second via 20B. Capacitive pressure sensor 10B is a high temperature capacitive pressure sensor. First sapphire wafer 12B is a dielectric single crystal sapphire membrane of capacitive pressure sensor 10B. In this embodiment, first sapphire wafer 12B is a movable wafer. First via 14B extends through first sapphire wafer 12B and is hermetically sealed to first sapphire wafer 12B. First via 14B is electrically conductive. First electrode 16B is positioned on first sapphire wafer 12B and first via 14B. First electrode 16B is also electrically connected to first via 14B. Second via 20B extends through first sapphire wafer 12B and is hermetically sealed to first sapphire wafer 12B. Second via 20B is electrically conductive. Second via 20B is spaced from first via 14B, and first electrode 16B does not contact second via 20B. Second sapphire wafer 18B is a dielectric single crystal sapphire membrane of capacitive pressure sensor 10B. In this embodiment, second sapphire wafer 18B is a stationary wafer. In alternate embodiments, second sapphire wafer 18B is a movable wafer. In further alternate embodiments, first sapphire wafer 12B is a stationary wafer and second sapphire wafer 18B is a movable wafer. Second electrode 22B is positioned on second sapphire wafer 18B.

Connector 52B is a conductive material connected to second electrode 22B and second via 20B. Second electrode 22B is electrically connected to second via 20B through connector 52B. Spacer 54B is connected to second sapphire wafer 18B and first electrode 16B such that spacer 54B is in alignment with first via 14B. Connector 52Band spacer 54B have the same shape and are symmetrically placed within capacitive pressure sensor 10B. First sapphire wafer 12B is peripherally and hermetically bonded to second sapphire wafer 18B to form capacitor chamber 24B, first electrode 16B and second electrode 22B being within capacitor chamber 24B. Capacitor chamber 24B is hermetically sealed. First electrode 16B is opposite second electrode 22B within capacitor chamber 24B, such that gap GB is formed between first electrode 16B and second electrode 22B.

First exterior wafer surface 26B is at a first side of first sapphire wafer 12B, and first interior wafer surface 28B is at a second side of first sapphire wafer 12B. First interior wafer surface 28B partially defines capacitor chamber 24B. First hole 30B is an opening defined by first sapphire wafer 12B that extends through first sapphire wafer 12B from first exterior wafer surface 26B to first interior wafer surface 28B. Second hole 44B is an opening defined by first sapphire wafer 12B that extends through first sapphire wafer 12B from first exterior wafer surface 26B to first interior wafer surface 28B. Second hole 44B is spaced from first hole 30B. Recess 32B extends into first sapphire wafer 12B at first interior wafer surface 28B. Recess 32B has a substantially uniform depth. First electrode 16B is positioned on first interior wafer surface 28B within recess 32B.

First exterior via surface 34B is at a first side of first via 14B, and first interior via surface 36B is at a second side of first via 14B. First via 14B is within first hole 30B such that first via 14B solidly fills first hole 30B, or takes up the entire space of first hole 30B such that first hole 30B is completely filled and no air gaps exist between first via 14B and first hole 30B. First exterior via surface 34B is about flush, or essentially co-planar, with first exterior wafer surface 26B, and first interior via surface 36B is about flush, or essentially co-planar, with first interior wafer surface 28B. First electrode 16B is positioned on first interior wafer surface 28B and first interior via surface 36B. First interior via surface 36B may be slightly dimpled, but remains aligned with first interior wafer surface 28B so that first electrode 16B contacts and covers first interior via surface 36B. In this embodiment, first electrode 16B fully covers first interior via surface 36B. First via 14B comprises, or is formed of, electrically conductive first filler 38B. In this embodiment, first filler 38B is a gold-based paste or material that becomes solid gold during formation of first via 14B. As such, first filler 38B begins as a paste primarily made of gold and solidifies to become solid gold, which has a high melting point. In alternate embodiments, first filler 38B may be a platinum-based material or any other suitable metal-based material that solidifies to become a solid metal with a high melting point such that first filler 38B can withstand extreme high temperature applications.

Second exterior via surface 46B is at a first side of second via 20B, and second interior via surface 48B is at a second side of second via 20B. Second via 20B is within second hole 44B such that second via 20B solidly fills second hole 44B, or takes up the entire space of second hole 44B such that second hole 44B is completely filled and no air gaps exist between second via 20B and second hole 44B. Second exterior via surface 46B is about flush, or essentially co-planar, with first exterior wafer surface 26B, and second interior via surface 48B is about flush, or essentially co-planar, with first interior wafer surface 28B. Second interior via surface 48B may be slightly dimpled, but remains aligned with first interior wafer surface 28B. Second via 20B comprises, or is formed of, electrically conductive second filler 50B. In this embodiment, second filler 50B is a gold-based paste or material that becomes solid gold during formation of second via 20B. As such, second filler 50B begins as a paste primarily made of gold and solidifies to become solid gold, which has a high melting point. In alternate embodiments, second filler 50B may be a platinum-based material or any other suitable metal-based material that solidifies to become a solid metal with a high melting point such that second filler 50B can withstand extreme high temperature applications. Connector 52B is connected to second interior via surface 48B and second electrode 22B, extending between second interior via surface 48B and second electrode 22B. As such, connector 52B is in alignment with second via 20B. Connector 52B is electrically conductive. In this embodiment, connector 52B is made of a gold-based material including a filler that lowers the melting point of connector 52B below the melting point of first filler 38B and the melting point of second filler 50B, the melting point of first filler 38B and the melting point of second filler 50B being the same. In alternate embodiments, connector 52B may be made of any suitable material capable of withstanding extreme high temperature applications.

Second exterior wafer surface 40B is at a first side of second sapphire wafer 18B, and second interior wafer surface 42B is at a second side of second sapphire wafer 18B. Second interior wafer surface 42B partially defines capacitor chamber 24B. Second electrode 22B is positioned on second interior wafer surface 42B. Spacer 54B is connected to second interior wafer surface 42B of second sapphire wafer 18B and first electrode 16B. Spacer 54B is made of the same material as connector 52B.

Capacitive pressure sensor 10B is made by drilling, such as by laser drilling, first hole 30B and second hole 44B in first sapphire wafer 12B. First hole 30B is solidly, or completely, filled with first via 14B, and second hole 44B is solidly, or completely, filled with second via 20B. To fill first hole 30B and second hole 44B, first filler 38B of first via 14B is pressed into first hole 30B in the form of a paste, and second filler 50B of second via 20B is pressed into second hole 44B in the form of a paste. First filler 38B and second filler 50B are then heated until first filler 38B and second filler 50B bond and solidify to become hermetically sealed to first sapphire wafer 12B. Because first via 14B and second via 20B comprise first filler 38B and second filler 50B, respectively, which have high melting points, such a bonding process occurs at a temperature high enough to melt.

The first sapphire wafer 12B is then EPI-polished to grind down, or remove, excess first filler 30B and second filler 50B, respectively, until first exterior via surface 34B, first interior via surface 36B, second exterior via surface 46B, and second interior via surface 48B are essentially flat and first sapphire wafer 12B is restored for further bonding. Specifically, first sapphire wafer 12B, first via 14B, and second via 20B are polished such that first exterior via surface 34B and second exterior via surface 46B are about flush, or essentially co-planar, with first exterior wafer surface 26B and first interior via surface 36B and second interior via surface 48B are about flush, or essentially co-planar, with first interior wafer surface 28B. Second sapphire wafer 18B may also be EPI-polished for further bonding. Following the formation of first via 14B and second via 20B, first interior wafer surface 28B of first sapphire wafer 12B is then etched to form recess 32B. In alternate embodiments, recess 32B may be etched before the formation of first via 14B and second via 20B.

First electrode 16B is deposited on an essentially flat surface formed by first interior wafer surface 28B and first interior via surface 36B such that first electrode 16B is positioned on both first interior wafer surface 28B and first interior via surface 36B. First electrode 16B does not contact second interior via surface 48B. Second electrode 22B is deposited on second interior wafer surface 42B.

Connector 52B is bonded to second interior via surface 48B of second via 20B after first electrode 16B and second electrode 22B are deposited on first sapphire wafer 12B and second sapphire wafer 18B, respectively, but before first sapphire wafer 12B is bonded to second sapphire wafer 18B. Spacer 54B is bonded to second interior wafer surface 42B. Connector 52B and spacer 54B may be spherical or any other suitable shape prior to bonding. First sapphire wafer 12B is directly peripherally bonded to second sapphire wafer 18B at first interior wafer surface 28B and second interior wafer surface 42B, respectively, through sapphire-sapphire direct bonding under vacuum to hermetically seal first sapphire wafer 12B to second sapphire wafer 18B and to form capacitor chamber 24B. More specifically, first sapphire wafer 12B is bonded to second sapphire wafer 18B in a vacuum oven, and first recess 32B partially defines capacitor chamber 24B. As a result, capacitor chamber 24B is a vacuum chamber, which is required for pressure sensing.

When first sapphire wafer 12B is bonded to second sapphire wafer 18B, the increase in temperature softens connector 52B and spacer 54B such that second electrode 22B presses down on connector 52B and bonds to connector 52B and first electrode 16B presses down on spacer 54B and bonds to spacer 54B. Second via 20B is electrically connected to second electrode 22B through connector 52B.

Alternatively, connector 52B is bonded to second electrode 22B in alignment with second via 20B, and spacer 54B is bonded to first electrode 16B in alignment with first via 14B. When first sapphire wafer 12B is bonded to second sapphire wafer 18B, the increase in temperature softens connector 52B and spacer 54B such that second interior via surface 48B of second via 20B presses down on connector 52B and bonds to connector 52B and second interior wafer surface 42B presses down on spacer 54B and becomes connected to spacer 54B. Second via 20B is electrically connected to second electrode 22B through connector 52B.

First sapphire wafer 12B and second sapphire wafer 18B withstand extreme high temperatures because they are made of sapphire. Additionally, first filler 38B and second filler 50B that make up first via 14B and second via 20B, respectively, can withstand extreme high temperatures because they are made of materials with high melting points. As such, capacitive pressure sensor 10B has the ability to measure pressure in extreme high temperature environments.

Capacitive pressure sensor 10B measures pressure by detecting a capacitance change between first electrode 16B and second electrode 18B. Capacitance is a function of gap GB between first electrode 16B and second electrode 18B. Gap GB changes when movable first sapphire wafer 12B deflects toward or away from stationary second sapphire wafer 18B as a result of external pressure due to the vacuum within capacitor chamber 24B. First via 14B and second via 20B are physically and electrically connected to first electrode 16B and second electrode 22B, respectively, to communicate the capacitance change as first sapphire wafer 12B and second sapphire wafer 18B are non-conductive. Connector 52B electrically connects second electrode 22B to second via 20B. Spacer 54B creates symmetry within capacitive pressure sensor 10B.

First via 14B and second via 20B solidly fill first hole 30B and second hole 44B, respectively, to achieve hermetic sealing. Polishing down excess first filler 30B creates a flat surface that allows first electrode 16B to fully cover first interior via surface 36B, so that no leaks can occur at edges of first via 14B. Specifically, first electrode 16B can fully cover first interior via surface 36B because first interior via surface 36B is about flush with first interior wafer surface 28B. As a result, first electrode 16B provides another layer of sealing by covering first hole 30B, further ensuring that capacitor chamber 24B is hermetically sealed.

Capacitive pressure sensor 10B is suitable for use in extreme high temperature applications, such as 800 degrees Celsius or above, and other harsh environmental applications. Because first via 14B and second via 20B are made of gold-based material that has a melting point higher than traditional fillers, first via 14B and second via 20B are not at risk of outgassing or reflowing and still provide good electric conduction. Capacitive pressure sensor 10B is easy to hermetically seal because first hole 30B and second hole 44B are solidly filled with first via 14B and second via 20B. Capacitive pressure sensor 10B remains hermetically sealed not only because first via 14B and second via 18B do not outgas or reflow, but also because first electrode 16B provides an additional seal over first hole 30B. Maintaining hermeticity is important because capacitive pressure sensor 10B must be hermetically sealed in order to maintain a vacuum within capacitor chamber 24B, which is necessary in order for capacitive chamber 24B to function properly.

More control over the formation of capacitive pressure sensor 10B is also possible because first via 14B and second via 20B are formed before first sapphire wafer 12B is bonded to second sapphire wafer 18B. First, since first via 14B and second via 20B are formed before capacitor chamber 24B is formed, high temperature first filler 30B and second filler 50B can be used without considering high temperature heating effects on other processes or components of capacitive pressure sensor 10B. Second, because first sapphire wafer 12B is still separate from second sapphire wafer 18B, first interior wafer surface 28B, first interior via surface 36B, and second interior via surface 48B are easily visible and accessible. As a result, first interior via surface 36B and second interior via surface 48B can be polished, and first electrode 16B can be deposited on first interior via surface 36B. Third, because first sapphire wafer 12B has not yet been bonded to second sapphire wafer 18B and excess first filler 30B and second filler 50B can be polished away prior to the formation of capacitor chamber 24B, first filler 30B and second filler 50B are not at risk of flowing into capacitor chamber 24B during formation of first via 14B and second via 20B. Fourth, the hermeticity of first sapphire wafer 12B, first via 14B, and second via 20B is easier to test with first sapphire wafer 12B and second sapphire wafer 18B not bonded together, making it possible to ensure that first via 14B and second via 20B are hermetically sealed prior to forming capacitor chamber 24B. Likewise, it is possible to easily test and ensure that first electrode 16B is sealed to and in electrical communication with first via 14B before first sapphire wafer 12B and second sapphire wafer 18B are bonded together. As such, the method for making capacitive pressure sensor 10B results in greater process robustness.

Forming first via 14B and second via 20B in first sapphire wafer 12B is cost-effective as only one wafer requires drilling. Additionally, placing both first via 14B and second via 20B in first sapphire wafer 12B offers a different packaging option for capacitive pressure sensor 10B.

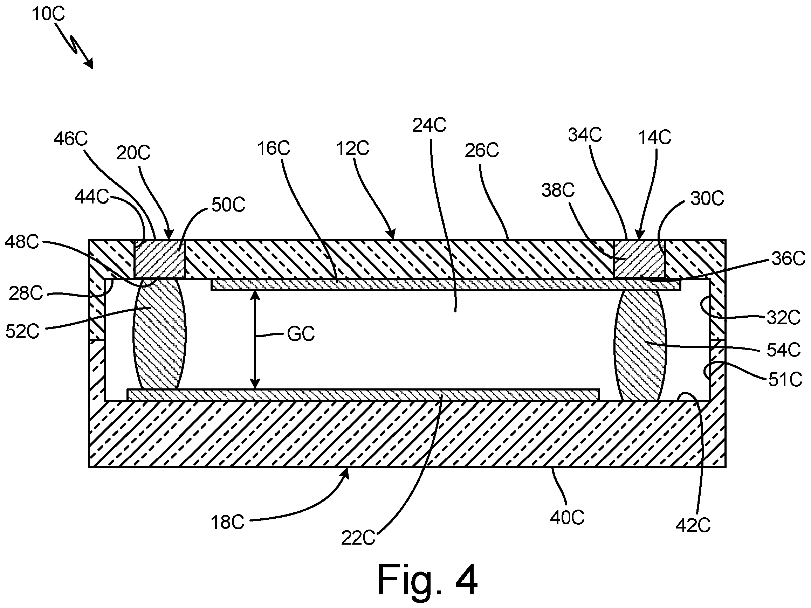

FIG. 4 is a cross-sectional view of capacitive pressure sensor 10C having first sapphire wafer 12C with first via 14C, second via 20C, first recess 32C, and connector 52C connecting second via 20C and second electrode 22C of second sapphire wafer 18C having second recess 51C. Capacitive pressure sensor 10C includes first sapphire wafer 12C, first via 14C, first electrode 16C, second sapphire wafer 18C, second via 20C, second electrode 22C, capacitor chamber 24C, connector 52C, and spacer 54C. First sapphire wafer 12C includes first exterior wafer surface 26C, first interior wafer surface 28C, first hole 30C, first recess 32C, and second hole 44C. First via 14C includes first exterior via surface 34C, first interior via surface 36C, and first filler 38C. Second sapphire wafer 18C includes second exterior wafer surface 40C, second interior wafer surface 42C, and second recess 51C. Second via 20C includes second exterior via surface 46C, second interior via surface 48C, and second filler 50C.

Capacitive pressure sensor 10C has the same structure and function as capacitive pressure sensor 10B in FIG. 3, except that second sapphire wafer 18C includes second recess 51C. First recess 32C has the same structure and function as described in reference to recess 32B of first sapphire wafer 12B of capacitive pressure sensor 10B in FIG. 3. Second recess 51C extends into second sapphire wafer 18C at second interior wafer surface 42C. Second recess 51C has a substantially uniform depth. Second electrode 22C is positioned on second interior wafer surface 42C within second recess 51C. Following the formation of first via 14C and second via 20C, second interior wafer surface 42C of second sapphire wafer 18C is etched to form second recess 51C. In alternate embodiments, second recess 32C may be etched before the formation of first via 14C and second via 20C. First sapphire wafer 12C is directly peripherally bonded to second sapphire wafer 18C at first interior wafer surface 28C and second interior wafer surface 42C, respectively, through sapphire-sapphire direct bonding under vacuum to hermetically seal first sapphire wafer 12C to second sapphire wafer 18C and to form capacitor chamber 24C. More specifically, first sapphire wafer 12C is bonded to second sapphire wafer 18C in a vacuum oven, and first recess 32C and second recess 51C define capacitor chamber 24C.

In this embodiment, capacitor chamber 24C formed by first recess 32C and second recess 51C has a larger gap GC than gap GB described in reference to FIG. 3. In alternate embodiments, gap GC may be the same size or smaller than gap GB. Having first sapphire wafer 12C with first recess 32C and second sapphire wafer 18C with second recess 51C offers a different packaging option for capacitive pressure sensor 10C.

## Claims

1. A high temperature capacitive pressure sensor (10B; 10C) comprising:
a first sapphire wafer (12B; 12C) having a first exterior wafer surface (26B; 26C) and a first interior wafer surface (28B;28C);
a first recess (32B; 32C) extending into the first sapphire wafer (12B; 12C) at the first interior wafer surface (28B;28C);
a second sapphire wafer (18B; 18C) having a second exterior wafer surface (40B; 40C) and a second interior wafer surface (42B; 42C), wherein the second sapphire wafer (18B; 18C) is bonded to the first sapphire wafer (12B; 12C) at the first interior wafer surface (28B;28C) and the second interior wafer surface (42B; 42C) to form a capacitor chamber (24B; 24C);
a first hole (30B; 30C) defined by and extending through the first sapphire wafer (12B; 12C);
a second hole (44B; 44C) defined by and extending through the first sapphire wafer (12B; 12C);
a first electrically conductive via (14B; 14C) that fills the first hole (30B; 30C), the first via (14B; 14C) including a first interior via surface (36B; 36C);
a second electrically conductive via (20B; 20C) that fills the second hole (44B; 44C), the second via (20B; 20C) including a second interior via surface (48B; 48C);
a first electrode (16B; 16C) deposited on the first interior wafer surface (28B; 28C) within the first recess (32B; 32C) and contacting the first interior via surface (36B; 36C); and
a second electrode (22B; 22C) deposited on the second interior wafer surface (42B; 42C) and electrically connected to the second via (20B; 20C) through an electrically conductive connector (52B; 52C) that extends between the second electrode (22B; 22C) and the second interior via surface (48B; 48C);
the capacitive pressure sensor, wherein
the first electrically conductive via (14B; 14C) solidly fills the first hole (30B; 30C);
wherein the second electrically conductive via (20B; 20C) solidly fills the second hole (44B; 44C);
wherein the first interior wafer surface, the first interior via surface (36B; 36C) and the second interior via surface (48B; 48C) are polished so that the first interior via surface and the second interior via surface are flush with the first interior wafer surface (28B; 28C), and the first via (14B; 14C) and the second via are hermetically sealed to the first sapphire wafer (12B; 12C) and the second sapphire wafer (18B; 18C) is hermetically bonded to the first sapphire wafer (12B; 12C); and
wherein the first electrode (16B; 16C) covers the first interior via surface (36B; 36C).

2. The capacitive pressure sensor of claim 1, wherein the connector (52B; 52C) has a melting point lower than a melting point of the first via (14B; 14C) and a melting point of the second via (20B; 20C), the melting point of the first via (14B; 14C) being the same as the melting point of the second via (20B; 20C).

3. The capacitive pressure sensor of any preceding claim, further including a second recess (51C) extending into the second sapphire wafer (18B; 18C) at the second interior wafer surface (42B; 42C), wherein the second electrode (22B; 22C) is deposited on the second interior wafer surface (42B; 42C) within the second recess (51C), and the first recess (32B; 32C) and the second recess (51C) define the capacitor chamber (24B; 24C).

4. The capacitive pressure sensor of any preceding claim, wherein the capacitor chamber (24B; 24C) is a vacuum chamber, the first via (14B; 14C) comprises a first filler, and the second via (20B; 20C) comprises a second filler, the first filler and the second filler being made of a gold-based material that becomes solid gold upon heating or a platinum-based material that becomes solid platinum upon heating.

5. The capacitive pressure sensor of any preceding claim, wherein the first electrode (16B; 16C) fully covers the first interior via surface (36B; 36C) of the first via (14B; 14C).

6. A method of making a capacitive pressure sensor (10B; 10C), the method comprising:
drilling a first hole (30B; 30C) in a first sapphire wafer (12B; 12C);
drilling a second hole (44B; 44C) in the first sapphire wafer (12B; 12C);
solidly filling the first hole (30B; 30C) with an electrically conductive first filler of a first via (14B; 14C);
solidly filling the second hole (44B; 44C) with an electrically conductive second filler of a second via (20B; 20C);
polishing the first sapphire wafer (12B; 12C) and the first via (14B; 14C) such that a first interior via surface (36B; 36C) is flush with a first interior wafer surface (28B;28C);
polishing the second via (20B; 20C) such that a second interior via surface (48B; 48C) is flush with the first interior wafer surface (28B; 28C);
depositing a first electrode (16B; 16C) on the first interior via surface (36B; 36C) and the first interior wafer surface (28B;28C); and
bonding the first sapphire wafer (12B; 12C) to a second sapphire wafer to form a capacitor chamber (24B; 24C), the first electrode (16B; 16C) being within the capacitor chamber (24B; 24C);
wherein the method further includes:
depositing a second electrode (22B; 22C) on a second interior wafer surface (42B; 42C) of the second sapphire wafer (18B; 18C) before bonding the first sapphire wafer (12B; 12C) to the second sapphire wafer (18B; 18C), the second electrode (22B; 22C) being within the capacitor chamber (24B; 24C) and wherein the second electrode (22B; 22C) is electrically connected to the second via (20B; 20C) through an electrically conductive connector (52B; 52C) that extends between the second electrode (22B; 22C) and the second interior via surface (48B; 48C).

7. The method of claim 6, further including etching the first interior wafer surface (28B;28C) to form a first recess (32B; 32C), wherein the first electrode (16B; 16C) is deposited within the first recess (32B; 32C).

8. The method of claim 6 or 7, wherein the capacitor chamber (24B; 24C) is formed to be a vacuum chamber.

9. The method of claim 6, 7 or 8, further including etching the second interior wafer surface (42B; 42C) to form a second recess (51C), wherein the second electrode (22B; 22C) is deposited within the second recess (51C).

10. The method of any of claims 6 to 9, and further including bonding the connector (52B; 52C) to the second interior via surface (48B; 48C) of the second via (20B; 20C).

11. The method of claim 10, wherein, bonding the first sapphire wafer to the second sapphire wafer (18B; 18C) includes bonding the connector (52B; 52C) to the second electrode (22B; 22C) on the second sapphire wafer (18B; 18C).

12. The method of any of claims 6 to 11, further including bonding the connector (52B; 52C) to the second electrode (22B; 22C) on the second sapphire wafer (18B; 18C), wherein the connector (52B; 52C) is in alignment with the second via (20B; 20C).

13. The method of claim 12, wherein bonding the first sapphire wafer (; 12B; 12C) to the second sapphire wafer (18B; 18C) includes bonding the connector (52B; 52C) to the second interior via surface (48B; 48C) of the second via (20B; 20C).

## Patentansprüche

1. Kapazitiver Hochtemperatur-Drucksensor (10B; 10C), Folgendes umfassend:
einen ersten Saphir-Wafer (12B; 12C), der eine erste äußere Wafer-Oberfläche (26B; 26C) und eine erste innere Wafer-Oberfläche (28B; 28C) aufweist;
eine erste Aussparung (32B; 32C), die sich in den ersten Saphir-Wafer (12B; 12C) an der ersten inneren Wafer-Oberfläche erstreckt (28B;28C);
einen zweiten Saphir-Wafer (18B; 18C), der eine zweite äußere Wafer-Oberfläche (40B; 40C) und eine zweite innere Wafer-Oberfläche (42B; 42C) aufweist, wobei der zweite Saphir-Wafer (18B; 18C) mit dem ersten Saphir-Wafer (12B; 12C) an der ersten inneren Wafer-Oberfläche (28B; 28C) und der zweiten inneren Wafer-Oberfläche (42B; 42C) verklebt ist, um eine Kondensatorkammer (24B; 24C) zu bilden;
ein erstes Loch (30B; 30C), das durch den ersten Saphir-Wafer (12B; 12C) definiert ist und sich durch diesen hindurch erstreckt;
ein zweites Loch (44B; 44C), das durch den ersten Saphir-Wafer (12B; 12C) definiert ist und sich durch diesen hindurch erstreckt;
einen ersten elektrisch leitenden Via (14B; 14C), der das erste Loch (30B; 30C) füllt, wobei der erste Via (14B; 14C) eine erste innere Via-Oberfläche (36B; 36C) beinhaltet;
einen zweiten elektrisch leitenden Via (20B; 20C), der das zweite Loch (44B; 44C) füllt, wobei der zweite Via (20B; 20C) eine zweite innere Via-Oberfläche (48B; 48C) beinhaltet;
eine erste Elektrode (16B; 16C), die auf der ersten inneren Wafer-Oberfläche (28B; 28C) innerhalb der ersten Aussparung (32B; 32C) angeordnet ist und die erste innere Via-Oberfläche (36B; 36C) berührt; und
eine zweite Elektrode (22B; 220), die auf der zweiten inneren Wafer-Oberfläche (42B; 42C) angeordnet ist und elektrisch mit dem zweiten Via (20B; 20C) durch einen elektrisch leitenden Verbinder (52B; 52C) verbunden ist, der sich zwischen der zweiten Elektrode (22B; 22C) und der zweiten inneren Via-Oberfläche (48B; 48C) erstreckt;
den kapazitiven Drucksensor, wobei
der erste elektrisch leitende Via (14B; 14C) das erste Loch (30B; 30C) massiv füllt;
wobei der zweite elektrisch leitende Via (20B; 20C) das zweite Loch (44B; 44C) massiv füllt;
wobei die erste innere Wafer-Oberfläche, die erste innere Via-Oberfläche (36B; 36C) und die zweite innere Via-Oberfläche (48B; 48C) so poliert sind, dass die erste innere Via-Oberfläche und die zweite innere Via-Oberfläche bündig mit der ersten inneren Wafer-Oberfläche (28B; 28C) sind und der erste Via (14B; 14C) und der zweite Via hermetisch zu dem ersten Saphir-Wafer (12B; 12C) abgedichtet sind und der zweite Saphir-Wafer (18B; 18C) hermetisch mit dem ersten Saphir-Wafer (12B; 12C) verklebt ist; und
wobei die erste Elektrode (16B; 16C) die erste innere Via-Oberfläche (36B; 36C) bedeckt.

2. Kapazitiver Drucksensor nach Anspruch 1, wobei der Verbinder (52B; 52C) einen Schmelzpunkt aufweist, der niedriger als ein Schmelzpunkt des ersten Via (14B; 14C) und ein Schmelzpunkt des zweiten Via (20B; 20C) ist, wobei der Schmelzpunkt des ersten Via (14B; 14C) derselbe wie der Schmelzpunkt des zweiten Via (20B; 20C) ist.

3. Kapazitiver Drucksensor nach einem vorhergehenden Anspruch, ferner eine zweite Aussparung (51C) beinhaltend, die sich in den zweiten Saphir-Wafer (18B; 18C) an der zweiten inneren Wafer-Oberfläche (42B; 42C) erstreckt, wobei die zweite Elektrode (22B; 22C) auf der zweiten inneren Wafer-Oberfläche (42B; 42C) innerhalb der zweiten Aussparung (51C) angeordnet ist und die erste Aussparung (32B; 32C) und die zweite Aussparung (51C) die Kondensatorkammer (24B; 24C) definieren.

4. Kapazitiver Drucksensor nach einem vorhergehenden Anspruch, wobei die Kondensatorkammer (24B; 24C) eine Vakuumkammer ist, der erste Via (14B; 14C) einen ersten Füllstoff umfasst und der zweite Via (20B; 20C) einen zweiten Füllstoff umfasst, wobei der erste Füllstoff und der zweite Füllstoff aus einem Material auf Goldbasis, das bei Erhitzen zu massivem Gold wird, oder aus einem Material auf Platinbasis, das beim Erhitzen zu massivem Platin wird, hergestellt sind.

5. Kapazitiver Drucksensor nach einem vorhergehenden Anspruch, wobei die erste Elektrode (16B; 16C) die erste innere Via-Oberfläche (36B; 36C) des ersten Via (14B; 14C) vollständig bedeckt.

6. Verfahren zum Herstellen eines kapazitiven Drucksensors (10B; 10C), wobei das Verfahren Folgendes umfasst:
Bohren eines ersten Lochs (30B; 30C) in einen ersten Saphir-Wafer (12B; 12C);
Bohren eines zweiten Lochs (44B; 44C) in den ersten Saphir-Wafer (12B; 12C);
massives Füllen des ersten Lochs (30B; 30C) mit einem elektrisch leitenden ersten Füllstoff eines ersten Via (14B; 14C);
massives Füllen des zweiten Lochs (44B; 44C) mit einem elektrisch leitenden zweiten Füllstoff eines zweiten Via (20B; 20C) ;
Polieren des ersten Saphir-Wafers (12B; 12C) und des ersten Via (14B; 14C), sodass eine erste innere Via-Oberfläche (36B; 36C) bündig mit einer ersten inneren Wafer-Oberfläche (28B; 28C) ist;
Polieren des zweiten Via (20B; 20C), sodass eine zweite innere Via-Oberfläche (48B; 48C) bündig mit der ersten inneren Wafer-Oberfläche (28B; 28C) ist;
Anordnen einer ersten Elektrode (16B; 16C) auf der ersten inneren Via-Oberfläche (36B; 36C) und der ersten inneren Wafer-Oberfläche (28B; 28C); und
Verkleben des ersten Saphir-Wafers (12B; 12C) mit einem zweiten Saphir-Wafer, um eine Kondensatorkammer (24B; 24C) zu bilden, wobei sich die erste Elektrode (16B; 16C) innerhalb der Kondensatorkammer (24B; 24C) befindet;
wobei das Verfahren ferner Folgendes beinhaltet:
Anordnen einer zweiten Elektrode (22B; 22C) auf einer zweiten inneren Wafer-Oberfläche (42B; 42C) des zweiten Saphir-Wafers (18B; 18C) vor dem Verkleben des ersten Saphir-Wafers (12B; 12C) mit dem zweiten Saphir-Wafer (18B; 18C), wobei sich die zweite Elektrode (22B; 22C) innerhalb der Kondensatorkammer (24B; 24C) befindet und wobei die zweite Elektrode (22B; 22C) elektrisch mit dem zweiten Via (20B; 20C) durch einen elektrisch leitenden Verbinder (52B; 52C) verbunden ist, der sich zwischen der zweiten Elektrode (22B; 22C) und der zweiten inneren Via-Oberfläche (48B; 48C) erstreckt.

7. Verfahren nach Anspruch 6, ferner Ätzen der ersten inneren Wafer-Oberfläche (28B;28C) beinhaltend, um eine erste Aussparung (32B; 32C) zu bilden, wobei die erste Elektrode (16B; 16C) innerhalb der ersten Aussparung (32B; 32C) angeordnet ist.

8. Verfahren nach Anspruch 6 oder 7, wobei die Kondensatorkammer (24B; 24C) so gebildet ist, dass sie eine Vakuumkammer ist.

9. Verfahren nach Anspruch 6, 7 oder 8, ferner Ätzen der zweiten inneren Wafer-Oberfläche (42B; 42C) beinhaltend, um eine zweite Aussparung (51C) zu bilden, wobei die zweite Elektrode (22B; 22C) innerhalb der zweiten Aussparung (51C) angeordnet ist.

10. Verfahren nach einem der Ansprüche 6 bis 9, ferner Verkleben des Verbinders (52B; 52C) mit der zweiten inneren Via-Oberfläche (48B; 48C) des zweiten Via (20B; 20C) beinhaltend.

11. Verfahren nach Anspruch 10, wobei das Verkleben des ersten Saphir-Wafers mit dem zweiten Saphir-Wafer (18B; 18C) Verkleben des Verbinders (52B; 52C) mit der zweiten Elektrode (22B; 22C) auf dem zweiten Saphir-Wafer (18B; 18C) beinhaltet.

12. Verfahren nach einem der Ansprüche 6 bis 11, ferner Verkleben des Verbinders (52B; 52C) mit der zweiten Elektrode (22B; 22C) auf dem zweiten Saphir-Wafer (18B; 18C) beinhaltend, wobei der Verbinder (52B; 52C) auf den zweiten Via (20B; 20C) ausgerichtet ist.

13. Verfahren nach Anspruch 12, wobei das Verkleben des ersten Saphir-Wafers (; 12B; 12C) mit dem zweiten Saphir-Wafer (18B; 18C) Verkleben des Verbinders (52B; 52C) mit der zweiten inneren Via-Oberfläche (48B; 48C) des zweiten Via (20B; 20C) beinhaltet.

## Revendications

1. Capteur de pression capacitif haute température (10B ; 10C) comprenant :
une première plaquette de saphir (12B ; 12C) ayant une première surface extérieure de plaquette (26B ; 26C) et une première surface intérieure de plaquette (28B ; 28C) ;
un premier évidement (32B ; 32C) s'étendant dans la première plaquette de saphir (12B ; 12C) au niveau de la première surface intérieure de plaquette (28B ; 28C) ;
une seconde plaquette de saphir (18B ; 18C) ayant une seconde surface extérieure de plaquette (40B ; 40C) et une seconde surface intérieure de plaquette (42B ; 42C), dans lequel la seconde plaquette de saphir (18B ; 18C) est liée à la première plaquette de saphir (12B ; 12C) au niveau de la première surface intérieure de plaquette (28B ; 28C) et de la seconde surface intérieure de plaquette (42B ; 42C) pour former une chambre de condensateur (24B ; 24C) ;
un premier trou (30B ; 30C) défini par et s'étendant à travers la première plaquette de saphir (12B ; 12C) ;
un second trou (44B ; 44C) défini par et s'étendant à travers la première plaquette de saphir (12B ; 12C) ;
un premier via (14B ; 14C) électriquement conducteur qui remplit le premier trou (30B ; 30C), le premier via (14B ; 14C) comportant une première surface intérieure de via (36B ; 36C) ;
un second via (20B ; 20C) électriquement conducteur qui remplit le second trou (44B ; 44C), le second via (20B ; 20C) comportant une seconde surface intérieure de via (48B ; 48C) ;
une première électrode (16B ; 16C) déposée sur la première surface intérieure de plaquette (28B ; 28C) à l'intérieur du premier évidement (32B ; 32C) et en contact avec la première surface intérieure de via (36B ; 36C) ; et
une seconde électrode (22B ; 22C) déposée sur la seconde surface intérieure de plaquette (42B ; 42C) et connectée électriquement au second via (20B ; 20C) par l'intermédiaire d'un connecteur (52B ; 52C) électriquement conducteur qui s'étend entre la seconde électrode (22B ; 22C) et la seconde surface intérieure de via (48B ; 48C) ;
le capteur de pression capacitif, dans lequel
le premier via (14B ; 14C) électriquement conducteur remplit solidement le premier trou (30B ; 30C) ;
dans lequel le second via (20B ; 20C) électriquement conducteur remplit solidement le second trou (44B ; 44C) ;
dans lequel la première surface intérieure de plaquette, la première surface intérieure de via (36B ; 36C) et la seconde surface intérieure de via (48B ; 48C) sont polies de sorte que la première surface intérieure de via et la seconde surface intérieure de via affleurent la première surface intérieure de plaquette (28B ; 28C), et le premier via (14B ; 14C) et le second via sont scellés hermétiquement à la première plaquette de saphir (12B ; 12C) et la seconde plaquette de saphir (18B ; 18C) est liée hermétiquement à la première plaquette de saphir (12B ; 12C) ; et
dans lequel la première électrode (16B ; 16C) recouvre la première surface intérieure de via (36B ; 36C).

2. Capteur de pression capacitif selon la revendication 1, dans lequel le connecteur (52B ; 52C) a une température de fusion inférieure à une température de fusion du premier via (14B ; 14C) et une température de fusion du second via (20B ; 20C), le point de fusion du premier via (14B ; 14C) étant le même que le point de fusion du second via (20B ; 20C).

3. Capteur de pression capacitif selon une quelconque revendication précédente, comportant en outre un second évidement (51C) s'étendant dans la seconde plaquette de saphir (18B ; 18C) au niveau de la seconde surface intérieure de plaquette (42B ; 42C), dans lequel la seconde électrode (22B ; 22C) est déposée sur la seconde surface intérieure de plaquette (42B ; 42C) à l'intérieur du second évidement (51C), et le premier évidement (32B ; 32C) et le second évidement (51C) définissent la chambre de condensateur (24B ; 24C).

4. Capteur de pression capacitif selon une quelconque revendication précédente, dans lequel la chambre de condensateur (24B ; 24C) est une chambre à vide, le premier via (14B ; 14C) comprend une première charge, et le second via (20B ; 20C) comprend une seconde charge, la première charge et la seconde charge étant constituées d'un matériau à base d'or qui devient de l'or massif lorsque chauffé ou d'un matériau à base de platine qui devient du platine massif lorsque chauffé.

5. Capteur de pression capacitif selon une quelconque revendication précédente, dans lequel la première électrode (16B ; 16C) recouvre entièrement la première surface intérieure de via (36B ; 36C) du premier via (14B ; 14C).

6. Procédé de fabrication d'un capteur de pression capacitif (10B ; 10C), le procédé comprenant :
le perçage d'un premier trou (30B ; 30C) dans une première plaquette de saphir (12B ; 12C) ;
le perçage d'un second trou (44B ; 44C) dans la première plaquette de saphir (12B ; 12C) ;
le remplissage solide du premier trou (30B ; 30C) avec une première charge électriquement conductrice d'un premier via (14B ; 14C) ;
le remplissage solide du second trou (44B ; 44C) avec une seconde charge électriquement conductrice d'un second via (20B ; 20C) ;
le polissage de la première plaquette de saphir (12B ; 12C) et du premier via (14B ; 14C) de sorte qu'une première surface intérieure de via (36B ; 36C) affleure une première surface intérieure de plaquette (28B ; 28C) ;
le polissage du second via (20B ; 20C) de sorte qu'une seconde surface intérieure de via (48B ; 48C) affleure la première surface intérieure de plaquette (28B ; 28C) ;
le dépôt d'une première électrode (16B ; 16C) sur la première surface intérieure de via (36B ; 36C) et la première surface intérieure de plaquette (28B ; 28C) ; et
la liaison de la première plaquette de saphir (12B ; 12C) à une seconde plaquette de saphir pour former une chambre de condensateur (24B ; 24C), la première électrode (16B ; 16C) étant à l'intérieur de la chambre de condensateur (24B ; 24C) ;
dans lequel le procédé comporte en outre :
le dépôt d'une seconde électrode (22B ; 22C) sur une seconde surface intérieure de plaquette (42B ; 42C) de la seconde plaquette de saphir (18B ; 18C) avant de lier la première plaquette de saphir (12B ; 12C) à la seconde plaquette de saphir (18B ; 18C), la seconde électrode (22B ; 22C) se trouvant à l'intérieur de la chambre de condensateur (24B ; 24C) et dans lequel la seconde électrode (22B ; 22C) est connectée électriquement au second via (20B ; 20C) par l'intermédiaire d'un connecteur électriquement conducteur (52B ; 52C) qui s'étend entre la seconde électrode (22B ; 22C) et la seconde surface intérieure de via (48B ; 48C).

7. Procédé selon la revendication 6, comportant en outre la gravure de la première surface intérieure de plaquette (28B ; 28C) pour former un premier évidement (32B ; 32C), dans lequel la première électrode (16B ; 16C) est déposée à l'intérieur du premier évidement (32B ; 32C).

8. Procédé selon la revendication 6 ou 7, dans lequel la chambre de condensateur (24B ; 24C) est formée pour être une chambre à vide.

9. Procédé selon la revendication 6, 7 ou 8, comportant en outre la gravure de la seconde surface intérieure de plaquette (42B ; 42C) pour former un second évidement (51C), dans lequel la seconde électrode (22B ; 22C) est déposée à l'intérieur du second évidement (51C).

10. Procédé selon l'une quelconque des revendications 6 à 9, et comportant en outre la liaison du connecteur (52B ; 52C) à la seconde surface intérieure de via (48B ; 48C) du second via (20B ; 20C).

11. Procédé selon la revendication 10, dans lequel la liaison de la première plaquette de saphir à la seconde plaquette de saphir (18B ; 18C) comporte la liaison du connecteur (52B ; 52C) à la seconde électrode (22B ; 22C) sur la seconde plaquette de saphir (18B ; 18C).

12. Procédé selon l'une quelconque des revendications 6 à 11, comportant en outre la liaison du connecteur (52B ; 52C) à la seconde électrode (22B ; 22C) sur la seconde plaquette de saphir (18B ; 18C), dans lequel le connecteur (52B ; 52C) est en alignement avec le second via (20B ; 20C).

13. Procédé selon la revendication 12, dans lequel la liaison de la première plaquette de saphir (12B ; 12C) à la seconde plaquette de saphir (18B ; 18C) comporte la liaison du connecteur (52B ; 52C) à la seconde surface intérieure de via (48B ; 48C) du second via (20B ; 20C).
